# DEMANDE DE BREVET EUROPEEN

(11) **EP 1 362 514 A1**
(43) Date de publication de la demande: **19.11.2003**
(21) Numéro de dépôt: 03360037.0
(22) Date de dépôt: 07.03.2003
(51) Int. Cl.: A21D 15/02, A21D 2/36, A21D 13/04

(54) **Pâte pour préparer un produit de boulangerie comprenant de la farine et de la semoule de blé**

(30) Priorité: 07.05.2002 FR 0205938
(71) Demandeur: Le Croustillant S.A.S., 34110 Frontignan (FR)
(72) Inventeur: Garreau, Claude, 34110 Frontignan (FR)
(74) Mandataire: Arbousse-Bastide, Jean-Claude Philippe

(57) **Abrégé**

Pâte pour préparer un produit de boulangerie et plus particulièrement un pain précuit surgelé caractérisée en ce qu'elle est constituée d'un mélange de semoule de blé dur très fine et de farine traditionnelle, d'un complément d'améliorant spécifique, de l'eau, du sucre, de la levure et du sel.

## Description

La présente invention a pour objet une pâte pour préparer un produit de boulangerie et plus particulièrement un pain précuit surgelé.

On connaît déjà des pains précuits surgelés qui permettent, dans le domaine de l'hôtellerie et de la restauration ou encore dans des commerces de vente de sandwiches ou des terminaux de cuisson, de mettre à disposition des consommateurs, après une cuisson d'une dizaine de minutes, 12 à 15 minutes, du pain frais croustillant.

Cependant, dans certaines conditions de vente, lors des heures de pointe, ou pour des activités à fort potentiel situées par exemple dans les gares ou les aéroports, ou dans des établissements autoroutiers, le temps de cuisson final des pains précuits actuels, prêts à être mis à la vente, est trop élevé et ne permet pas de répondre à la demande.

Une solution serait de précuire plus longtemps le pain jusqu'à coloration de la croûte.

Toutefois, l'augmentation du temps de précuisson des pains précuits surgelés actuels, du fait de la composition de leur pâte, entraîne un écaillement du pain à la décongélation et lors de la cuisson finale.

La présente invention a pour but de remédier à ces inconvénients en proposant une pâte pour pain précuit surgelé permettant d'obtenir un temps de cuisson final de quelques minutes.

La pâte pour pain précuit surgelé selon la présente invention se caractérise essentiellement en ce qu'elle est formée à partir d'un mélange de semoule de blé dur très fine et de farine traditionnelle et d'un complément d'améliorant spécifique, de l'eau, du sucre, de la levure et du sel.
Lors de la préparation de la pâte la farine, la semoule, le sucre, l'eau et l'améliorant seront incorporés dans un premier temps puis la levure sera incorporée quelques minutes après et enfin le sel quelques minutes plus tard après l'incorporation de ladite levure dans le mélange premier.

La farine sera de préférence une farine de type 55.

Le complément d'améliorant permet de faciliter le lissage de la pâte.

En outre, pour accentuer la coloration de la pâte avant sa cuisson finale, celle-ci comportera un faible pourcentage de sucre.

La semoule de blé dur introduite dans le mélange a pour effet de conserver l'humidité du pain et d'avoir une bonne homogénéité de la mie ce qui permet de réaliser une précuisson de la pâte jusqu'à coloration de cette dernière sans entraîner d'écaillement du pain à la décongélation et lors de sa cuisson finale.

La pâte pour pain selon la présente invention comprendra :
De 30 % à 40 % de farine
De 20 % à 30 % de semoule de blé
De 1 % à 1, 5 % de levure
De 1 % à 1, 5 % de sel
De 0, 05 % à 0, 15 % de sucre
De 35 % à 40 % d'eau
De 0, 10 % à 0, 30 % d'améliorant

La pâte pour pain obtenue à l'aide du procédé de fabrication selon la présente invention comprendra sur une base de 100 % :
- Farine type 55 35 Kg 34, 14 %
- Semoule de blé 25 Kg 24, 40 %
- Levure 1, 2 Kg 1, 26 %
- Sel 1, 2 Kg 1, 26 %
- Sucre 0, 8 Kg 0, 10 %
- Eau 37, 8 L 38, 64 %
- Améliorant 1, 8 Kg 0, 20 %

A la minute 0, l'incorporation des ingrédients concernera :
- la farine type 55,
- la semoule de blé,
- le sucre
- l'eau
- l'améliorant quelques minutes plus tard, environ 6 minutes : la levure, et environ 10 minutes après les premiers ingrédients, le sel.

Le temps de pétrissage variera en fonction du type de pétrin en spirale ou oblique.

Ainsi, pour un pétrissage sur pétrin en spirale, on effectuera un temps de pétrissage de 8 minutes en vitesse lente et un temps de pétrissage de 6 minutes en vitesse rapide.

Pour un pétrissage sur pétrin oblique, on réalisera un temps de pétrissage de 6 minutes en vitesse lente et de 11 minutes en vitesse rapide.

La température de la pâte en fin de pétrissage sera de 20°C minimum et de 22°C maximum.

Le temps de fermentation sera d'environ 2 h 30.

La température de fermentation sera comprise entre 22°C et 24°C.

L'hygrométrie de fermentation sera comprise entre 70 % à 75 %.

Le temps de cuisson sera compris entre 12 à 13 minutes.

La température de cuisson sera de préférence égale à 250°C.

Le pain congelé présente ainsi un aspect coloré, ce qui permet de réduire de manière substantielle le temps de cuisson final du pain précuit surgelé pour sa présentation à la vente.

Il est ainsi possible de ramener en quelques minutes, de l'ordre de 3 minutes, le pain congelé, réalisé avec une pâte selon la présente invention, avec sa croustillance à l'instar d'un pain cuit de façon traditionnelle sans écaillement.

En outre, il est possible, en cas de précipitation à la vente, de mettre à disposition du consommateur un pain décongelé sans cuisson finale.

## Revendications

1. Pâte pour préparer un produit de boulangerie et plus particulièrement un pain précuit surgelé **caractérisée en ce qu'**elle est constituée d'un mélange de semoule de blé dur très fine et de farine traditionnelle, d'un complément d'améliorant spécifique, de l'eau, du sucre, de la levure et du sel.

2. Pâte selon la revendication 1 **caractérisée en ce que**, lors de la préparation de la pâte, la farine, la semoule, le sucre, l'eau et l'améliorant sont incorporés dans un premier temps puis la levure est incorporée quelques minutes plus tard et enfin le sel est incorporé quelques minutes après l'incorporation de ladite levure dans le mélange premier.

3. Pâte selon la revendication 1 ou la revendication 2 **caractérisée en ce que** la pâte comprend
De 30 % à 40 % de farine
De 20 % à 30 % de semoule de blé
De 1 % à 1, 5 % de levure
De 1 % à 1, 5 % de sel
De 0, 05 % à 0, 15 % de sucre
De 35 % à 40 % d'eau
De 0, 10 % à 0, 30 % d'améliorant

4. Pâte selon l'une quelconque des revendications précédentes **caractérisée en ce que** la farine est une farine de type 55.
